# EUROPEAN PATENT APPLICATION

(11) **EP 4 528 685 A1**
(43) Date of publication of application: **26.03.2025**
(21) Application number: 23198892.4
(22) Date of filing: 21.09.2023
(51) Int. Cl.: G07C 9/20, G07C 9/28, H04W 4/00

(54) **MULTI-CHANNEL SIGNALING METHOD FOR ACCESS CONTROL**

(71) Applicant: dormakaba Schweiz AG, 8623 Wetzikon (CH)
(72) Inventor: MELI, Louis Marcel, 8700 Kuesnacht (CH); DUETSCHLER, Urs, 8620 Wetzikon (CH)
(74) Representative: Balder IP Law, S.L.

(57) **Abstract**

According to a first aspect of the present invention, a computer-implemented multi-channel signaling method for access control is provided. The method may be performed at least by an access enforcement point. The access enforcement point may be configured to cause operation of an access point. The method may comprise receiving a first signal, via a first communication channel, by the access enforcement point. The first signal may comprise an instruction. The method may further comprise receiving a second signal, via a second communication channel, by the access enforcement point. The second signal may comprise the instruction. The first communication channel may differ from the second communication channel.

## Description

### FIELD OF THE INVENTION

The present invention relates to a multi-channel signaling method for access control, in particular to highly reliable methods. Further, the present invention relates to an access control system and an access enforcement point. Further, the present invention relates to corresponding computer programs.

### BACKGROUND OF THE INVENTION

Entry systems have become widely used in applications in particular for access control in building facilities. Access control relates to granting, denying or limiting access to particular section(s) of a controlled area, usually by means of some level of access control by use of a barrier, such as a door, turnstile, parking gate, elevator door, or other barrier.

Various prior art systems are known for access control based on various principles using corresponding technologies. According to a first known approach, referred to as "who you are", access control is aimed to be achieved by identifying the individuals themselves, implemented using biometric identification technologies. One particular biometric identification technology used for people flow control uses face recognition to identify individuals. While face recognition technology has its merits, it is prone to error and is therefore often unreliable. Furthermore, face recognition technology has proven to be greatly affected by face covering, being for cultural and/or hygienic reasons. Further, face recognition is based on at least one camera which is always active which is not energy efficient. Alternative particular biometric identification technology used for access flow control uses fingerprint to identify individuals. Such is however disadvantageous as fingerprint recognition is often unreliable (slow, affected by the dryness of one's skin) and is particularly disadvantageous as it requires contact with a frequently used surface (the fingerprint reader).

According to a further known approach, referred to as "what you have", access control is based on identifying individuals using something the user possesses, referred to as a token or authentication medium. Particularly advantageous are keyless entry systems due to their convenience and/or reliability. Keyless entry systems may for example operate in that an BLE (Bluetooth Low Energy) or UWB (Ultra-Wideband) access control terminal executes a wireless communication with an authentication device, such as a keyless fob, a keycard or an authentication medium incorporating a corresponding wireless transceiver. Once said wireless communication between the access control terminal and the authentication medium has been executed, the access control terminal exchanges data messages with the authentication medium. The authentication can be initiated either by a user, for instance by pressing a button on the authentication medium to trigger transmission of authentication data to the access control terminal. Upon successful authentication, i.e. verification of user credentials (e.g. by correlating authentication data received from the authentication device with a list of authorized users), the access control terminal grants access to the user in possession of the respective authentication medium, e.g. by opening said barrier. On the other hand, if the authentication fails, the access control terminal denies access to the user in possession of the respective authentication medium, e.g. by locking the barrier/ by keeping the barrier locked.

For close-range applications, a radio-frequency identification (RFID) transponder (or tag) is often used, which has mostly replaced earlier magnetic stripe cards. Other current solutions use infra-red systems or radio systems to transmit an authenticating signal from an authentication medium to an access control terminal of a security control system. Close proximity keyless systems, (i.e. between direct contact and a threshold of a few centimeters), for example RFID based systems, allow determination of a user's proximity to a barrier by appropriate placement of a reader of the access control terminal. However, as their name implies close-proximity keyless systems suffer from the disadvantage that they require a very close proximity of the authentication medium to the access control terminal. In order to overcome this disadvantage, mid-range keyless entry systems have been proposed, in particular based on BLE and/or UWB communication. UWB systems are advantageous since they allow reliable mid-range communication without a user having to precisely identify the reader device. As the communicating range between an authentication device and an UWB access control terminal increases, the convenience and ease-of-use increases, because the authentication medium does not need to be placed in very close range, such as less than one centimeter from the UWB access control terminal. The user no longer needing to precisely locate the UWB access control terminal (or its antenna) not only adds convenience but also has the potential to speed up the process, thereby increasing the throughput through a barrier.

The network topologies of said access control systems typically comprise a central access rights server to which each access control terminal is connected. An authentication medium held by a user is brought close to an access control terminal for wireless exchange of credentials. These credentials are then transmitted from the access control terminal to the server, which performs a look-up in a database of access rights. If access is granted, the server sends a signal to the access control terminal, which allows the user access through an electronically controlled doorway. The disadvantage of this topology is that it requires each access control terminal to be permanently connected to the server, which is associated with considerable cost in wiring and presents a single point of failure. More modern access control systems have relegated access control decisions to the access control terminals themselves. If these access control terminals are not connected to the server, however, the issue then arises of how and when to update the database of access rights in each access control terminal.

Other access rights systems invert the situation by storing a database or table of the user's access rights in the mediums themselves. At an access control point, the access control terminals and the authentication medium exchange data containing an identifier of the access control terminal and the user's access rights at that access control point. Authentication mediums are however vulnerable entities with respect to date protection. Further, updating access rights becomes cumbersome as every affected party must have its authentication medium updated with new access rights.

Wireless communication of an access control terminal may be disturbed, e.g. due to interference with other wireless signals.

None of the known concepts provides a highly reliable signaling method for access control. Therefore, there is a need for such solution.

### SUMMARY OF THE INVENTION

It is an object of the present invention to provide a multi-channel signaling method for access control, an access control system, and an access enforcement point, which at least partially overcome the above-mentioned disadvantages. In particular, it is an object of the present invention to provide a multi-channel signaling method for access control which is highly reliable and intuitive to use.

According to the present invention, the above-mentioned objects are addressed through the features of the independent claims. In addition, further advantageous embodiments follow from the dependent claims and the description.

According to a first aspect of the present invention, a computer-implemented multi-channel signaling method for access control is provided. The method may be performed at least by an access enforcement point. The access enforcement point may be configured to cause operation of an access point. The method may comprise receiving, by the access enforcement point and via a first communication channel, a first signal. The first signal may comprise an instruction. The method may further comprise receiving, by the access enforcement point and via a second communication channel, a second signal. The second signal may comprise the instruction. The first communication channel may differ from the second communication channel.

The multi-channel signaling method of the present disclosure allows for a particularly high reliability in signal transmission/reception. E.g., the present method allows to choose a communication channel that it less disturbed/not disturbed as compared to another communication channel. The present method also allows to combine communication channels to have redundancy. The present method allows for a plurality of access enforcement points that are located close to each other (i.e. a plurality of access enforcement points having a high spatial density) and that still work reliably. The present method allows to reduce or avoid frustration of users as it allows to prevent/avoid collisions of different signals, which may disturb each other and which may otherwise cause delays. The present method may allow for increased security it is more difficult to hack/jam two communication channels compared to hacking/jamming a single communication channel. The present method may allow for wakeup of an access enforcement point. The second signal may confirm the first signal and vice versa. The second signal may confirm the instruction of the first signal and vice versa.

The term access enforcement point may include any device that is capable of causing operation, e.g. unlocking and/or locking, of an access point. In particular, the access enforcement point may not have decision taking capabilities for deciding whether to unlock or not based on the validity of a credential. Rather, the access enforcement point may be capable of performing or causing unlocking and/or locking a respective access point upon receiving a respective command. An access enforcement point may be associated to/may have an access point. An access point may be associated to/may have an access enforcement point. The access point may include an actuator for unlocking and/or locking the access point. Thus, in other words, the access enforcement point may be understood as a stupid device which may only execute commands without taking any decision, e.g., on whether a user has an intent to unlock or whether the user is allowed to access a respective access point. Further, the access enforcement point may be capable of low-power wireless communication in order to receive said commands, in particular from one or more access decision points and/or from an authentication medium. Due to this configuration of the access enforcement point, the access enforcement point may be operated with a very low energy consumption. This is beneficial because the need for maintenance is significantly reduced. In other words: An access enforcement point essentially only needs maintenance in case if it is damaged or in case if it runs out of energy. The access enforcement point may not be connected to a power grid, e.g. in order to keep the installation effort low.

The term access point may include any device that is capable of allowing/blocking access, e.g. by being unlocked/locked.

The access enforcement point may be a low-power access enforcement point.

It may be provided that the access enforcement point causes unlocking of an associated access point e.g. upon receiving an unlock-command, e.g. from an access decision point. The access enforcement point may be configured to cause operation of the access point, in particular unlocking and/or locking of the access point. The access point may therefore include means for performing/causing unlocking, e.g. a lock.

The access point may comprise a lock of a postbox and/or a parcel box and/or a door and/or an automatic door and/or a lockable piece of furniture and/or an access restricted trigger mechanism. Optionally, the instruction may comprise a locking command, e.g. to lock the access point. Optionally, the instruction may comprise an unlocking command, e.g. to unlock the access point.

It may be provided that the access enforcement point and/or the access point include signaling means, in particular a visual signaling means and/or an acoustic signaling means, e.g. for indicating a status and/or an operation of the access enforcement point and/or the access point, e.g. locked/unlocked.

Operation of an access point may e.g. comprise unlocking and/or locking of the access point.

The term "communication channel" may refer to a logical connection, e.g. over a multiplexed medium. A communication channel may be used for information transfer. The term "communication channel" may also refer to a physical transmission medium such as a wire. The term "communication channel" may refer to a specific communication protocol or a specific technology used for signal transmission/reception.

The first communication channel and the second communication channel each may be based on respective specific technologies, e.g. selected from Bluetooth Low Energy, Ultra-Wideband, Wifi, Zigbee, LoRa, ultrasound, wired communication. The specific technology of the first communication channel may differ from the specific technology of the second communication channel. E.g., the first communication channel may be based on one of the following, Bluetooth Low Energy, Ultra-Wideband, Wifi, ultrasound, wired communication, and the second communication channel may be based on another one of the following, Bluetooth Low Energy, Ultra-Wideband, Wifi, Zigbee, LoRa, ultrasound, wired communication.

The first communication channel and the second communication channel may have respective properties, e.g. frequency band, carrier frequency, communication range, energy efficiency, communication protocol, transmission medium (e.g., space for electromagnetic waves, air for ultrasound, wires), type of transmitted signal, and more. The first communication channel and the second communication channel may differ with respect to any property/aspect. The term "aspect of a communication channel" may refer to a property of the communication channel.

The instruction may comprise a command for the access enforcement point to perform a specific action, e.g. to cause operation (locking and/or unlocking) of an access point. The instruction may be directed to the access enforcement point. The term instruction may be understood as "command".

The method may comprise sending, by a sender and via the first communication channel, the first signal, to the access enforcement point. The method may comprise sending, by a sender and via the second communication channel, the second signal to the access enforcement point. The sender e.g. may be an access decision point or an authentication medium.

The second signal may be received simultaneously to receiving the first signal. The second signal may be received within less than 200 ms before or after receiving the first signal.

The second signal may be received within less than 500 ms before or after receiving the first signal. The second signal may be received within less than 100 ms before or after receiving the first signal.

The first communication channel may differ from the second communication channel in respect to at least one of the following aspects: frequency band, carrier frequency, communication range, energy efficiency, and communication protocol.

E.g., the frequency band used for signal transmission/reception may differ. E.g., the bandwidth of the frequency bands may differ. E.g., the center frequency and/or the start/stop frequencies of the frequency bands may differ. Having communication channels that differ in these regards may allow to avoid a frequency band that is disturbed, e.g. as the other frequency band may be not disturbed. The frequency band of the first communication channel may differ from the frequency band of the second communication channel, e.g. they may have no frequency overlap. The frequency band of the first communication channel may be close to the frequency band of the second communication channel. E.g., the center frequencies of both frequency bands may differ by less than 10%, or by less than 5%, or by less than 1%. E.g., the difference between the frequency band of the first communication channel and the frequency band of the second communication channel may be less than the bandwidth of the frequency band of the first communication channel or less than the bandwidth of the frequency band of the second communication channel.

E.g., the carrier frequency may differ. This may allow to avoid a disturbed carrier frequency. The carrier frequency of the first communication channel may differ from the carrier frequency of the second communication channel but may be close to the carrier frequency of the second communication channel. E.g. the carrier frequencies may differ by less than 10%, or by less than 5%, or by less than 1%.

Using different frequencies/frequency bands for the different communication channels may allow to avoid collisions or disturbance.

The frequency/frequency band of the first and/or of the second communication channel may have no overlap with predetermined frequency bands, e.g. commonly used frequency bands such as 2.4 GHz and/or consumer bands.

E.g., the communication range may be different. The communication range may refer to a distance between a sender and the access enforcement point, up to which the access enforcement point is able to receive the signal. Having different communication ranges may allow to reach an access enforcement point that may be out of reach of the other communication channel. The communication range may be a transmission range and/or a receiving range.

E.g., the energy efficiency may differ. This may allow to select the most energy-efficient communication channel in order to enable a low power consumption, e.g. of the access enforcement point. When both communication ranges are sufficient, e.g. the communication channel having the better energy efficiency may be used.

The term "communication protocol" may refer to "a system of rules that allows information transmission/reception".

The first communication channel may use a first communication protocol. The second communication channel may use a second communication protocol. The first communication protocol may differ from the second communication protocol. Optionally, the first communication protocol may differ from the second communication protocol in terms of at least one of the following aspects: type of information encoding, modulation type, signal amplitude, energy efficiency, communication range and information density.

The signal levels may be different.

E.g., using communication channels that have different information densities may allow to use a high information density channel for fast communication, or to use the other communication channel if other beneficial properties of this channel are more desired, such as e.g. high fidelity.

The first communication protocol and the second communication protocol each may be based on respective specific technologies, e.g. selected from Bluetooth Low Energy, Ultra-Wideband, Wifi, Zigbee, LoRa, ultrasound, wired communication. The specific technology of the first communication protocol may differ from the specific technology of the second communication protocol. E.g., the first communication protocol may be based on one of the following, Bluetooth Low Energy, Ultra-Wideband, Wifi, ultrasound, wired communication, and the second communication protocol may be based on another one of the following, Bluetooth Low Energy, Ultra-Wideband, Wifi, Zigbee, LoRa, ultrasound, wired communication.

The method may further comprise: verifying that the instruction comprised in the second signal corresponds to the instruction comprised in the first signal.

This may improve the security of the access enforcement point.

The method may further comprise: verifying that the instruction comprised in the second signal is identical to the instruction comprised in the first signal.

E.g., the access enforcement point may verify that the instruction comprised in the second signal corresponds to the instruction comprised in the first signal.

The method may further comprise: causing, by the access enforcement point, operation of the access point according to the instruction. Optionally, operation of the access point may only be caused upon verifying that the instruction comprised in the second signal corresponds to the instruction comprised in the first signal.

In this way, an access enforcement point may request instructions, e.g. upon being externally triggered.

The method may further comprise, prior to receiving the first signal and prior to receiving the second signal: sending, by the access enforcement point, an instruction request.

The method may further comprise performing instruction-polling by the access enforcement point. Instruction-polling may include repeatedly sending instruction requests according to predefined time intervals.

The access enforcement point may send the instruction request to an access decision point.

The method may further comprise comparing the first communication channel and the second communication channel. The method may optionally further comprise: selecting, e.g. based on comparing the first communication channel and the second communication channel, a preferred communication channel.

The method may allow to perform band steering, i.e. to select an undisturbed frequency band/a less disturbed frequency band. Carrier frequencies/frequency bands may be selected from a predetermined list. This may allow operation of a large number of access enforcement points while avoiding signal collisions.

The preferred communication channel may be a preferred communication channel of the access enforcement point. The preferred communication channel may be a preferred communication channel of the access enforcement point for further communication, e.g. for sending and/or receiving future signals. The preferred communication channel may be set as a default communication channel for the access enforcement point.

Comparing the first communication channel and the second communication channel may comprise comparing the first signal and the second signal. Comparing the first communication channel and the second communication channel may comprise determining a signal quality of the first signal and the second signal, respectively. The signal quality may be a transmission quality.

Selecting the preferred communication channel may comprise: Selecting the communication channel having the better signal quality/transmission quality. Selecting the preferred communication channel may be based on the signal quality/transmission quality. Selecting the preferred communication channel may be based on a signal disturbance. Selecting the preferred communication channel may be based on an energy consumption of receiving a signal via the respective communication channel.

The preferred communication channel may be set as a default communication channel for further communication of the access enforcement point. The preferred communication channel may be a preferred communication channel for further communication with the access enforcement point/of the access enforcement point, e.g. between a sender of the instruction and the access enforcement point.

The access enforcement point may comprise energy harvesting means. The method may further comprise harvesting energy, by the energy harvesting means. The method may further comprise providing the harvested energy to the access enforcement point.

The energy harvesting means may comprise a solar cell, e.g. an indoor solar cell. The energy harvesting means may comprise an energy storage, e.g. a battery.

The method may comprise storing harvested energy, e.g. electrical energy, e.g. harvested by the solar cell, in the energy storage. The energy harvesting means and/or the energy storage may be adapted to provide an amount of energy to the access enforcement point that is sufficient to operate the access enforcement point. I.e., the energy harvesting means and/or the energy storage may be adapted to power the access enforcement point. The access enforcement point may be not electrically connected to a power-grid. The access enforcement point may be electrically independent from a power-grid. The solar cell may be configured to charge the energy storage, i.e. to transfer energy into the energy storage. The energy storage may be configured to power the access enforcement point in the absence of a solar cell signal, e.g. in the dark.

The access enforcement point may be operable in a low-power mode and in an active mode. The access enforcement point being in the low-power mode may be configured to operate at a lower power consumption as compared to a power consumption of the access enforcement point being in the active mode. In the low-power mode, the access enforcement point may be able to receive signals via the first communication channel. In the low-power mode, the access enforcement point may be unable to receive signals via the second communication channel. In the active mode, the access enforcement point may be able to receive signals via the second communication channel. The method may further comprise, e.g. upon receiving the first signal e.g. via the first communication channel, switching the access enforcement point into the active mode. The method may further comprise receiving, e.g. by the access enforcement point e.g. being in the active mode, the second signal, e.g. via the second communication channel.

This may allow to achieve a particularly low energy consumption of the access enforcement point while also achieving a high degree of reliability.

In the active mode, the access enforcement point may also be able to receive signals via the first communication channel.

The first signal may be/may be understood as a wakeup signal.

In the low-power mode, the access enforcement point may be configured to receive signals via the first communication channel. In the low-power mode, the access enforcement point may be configured to not receive signals via the second communication channel. In the active mode, the access enforcement point may be configured to receive signals via the second communication channel.

In the active mode, the access enforcement point may be able to cause operation of the access point.

Allowing access enforcement points to remain in the low-power mode, when they are not needed/when they are not intended to cause operation of an access point, may decrease the power consumption of access enforcement points. Access enforcement points may be powered by batteries and/or energy harvesting means, e.g. a(n) (indoor) solar cell. Decreasing the power consumption of access enforcement points may increase the reliability and decrease the risk of failure due to the access enforcement point running out of battery. Energy harvesting means may need to provide less energy and may be manufactured more cost-efficiently. The need of maintenance may be reduced. In other words: An access enforcement point that is configured to perform the above method essentially only needs maintenance in case it is damaged or in case it runs out of energy.

The method may allow to switch an access enforcement point into an active mode and to cause operation of a corresponding access point in a very short time interval, e.g. such that a user may not recognize any latency in causing operation of the corresponding access point.

The low-power mode may be a low-power receiving mode in which the access enforcement point preferably only responds/takes action upon receiving a signal via the first communication channel. Other signals, e.g. signals via the second communication channel, may be ignored by the access enforcement point in the low-power mode, e.g. in order to save energy.

The access enforcement point may comprise a first receiver configured to receive signals via the first communication channel. The access enforcement point may comprise a second receiver configured to receive signals via the second communication channel.

In the low-power mode, the first receiver may be active. In the low-power mode, the second receiver may be inactive. In the active mode, the first receiver may be active. In the active mode, the second receiver may be active.

An inactive component may be a sleeping component and/or a deactivated component. An inactive component may be in a non-operating state. An active component may be in an operating state. An active receiver may be able to/may be configured to receive signals. An inactive receiver may be configured to not receive signals/may not be configured to receive signals/may not be able to receive signals.

The first receiver e.g. may be always active, e.g. the first receiver may be active when the access enforcement point is in the active mode, and e.g. also when the access enforcement point is in the low-power mode.

The first signal may be received from an authentication medium. The second signal may be received from the authentication medium. Optionally, the authentication medium may be a mobile device. Optionally, the authentication medium may be a physical key card. Optionally, the authentication medium may include a credential. Optionally, a validity of the credential may be determined, prior to sending the first signal and the second signal. Optionally, sending the first signal and the second signal may be performed only upon determining that the credential is valid.

The method may comprise: Sending the first signal via the first communication channel by the authentication medium to the access enforcement point. The method may comprise: Sending the second signal via the second communication channel by the authentication medium to the access enforcement point.

The authentication medium may be a token, a badge, a mobile device, or a physical key card.

The authentication medium may be configured to send the first signal via the first communication channel. The authentication medium may be configured to send the second signal via the second communication channel.

The validity of the credential may be determined using the authentication medium, e.g. by using a finger print sensor, e.g. of a smartphone, and/or by unlocking a lock screen.

It may be provided that the validity of the credential to cause operation of the respective access enforcement point is verified by a backend server with which e.g. an access decision point and/or the authentication medium may communicate.

The first signal may be received from an access decision point. The second signal may be received from an access decision point. The access decision point may be configured to receive a signal of an authentication medium of a user. The access decision point may be configured to determine an intent of the user to operate the access point, e.g. upon receiving the signal of the authentication medium. The access decision point may be configured to generate the instruction, e.g. dedicated to the access enforcement point, e.g. upon determining the intent of the user. The access decision point may be configured to send, e.g. via the first communication channel, the first signal to the access enforcement point. The first signal may comprise the instruction. The access decision point may be configured to send, e.g. via the second communication channel, the second signal to the access enforcement point. The second signal may comprise the instruction. Optionally, the access decision point may be configured to receive the instruction request sent by the access enforcement point. Optionally, the access decision point may be configured to generate the instruction based on receiving the instruction request.

The method may comprise: Sending the first signal via the first communication channel by the access decision point to the access enforcement point. The method may comprise: Sending the second signal via the second communication channel by the access decision point to the access enforcement point.

The method may comprise: sending a signal by an authentication medium to the access decision point. The signal sent by the authentication medium to the access decision point may comprise a credential. The method may comprise determining a validity of the credential, e.g. by the access decision point and/or by the authentication medium, e.g. prior to sending the first signal and the second signal. In some embodiments, sending the first signal and the second signal by the access decision may be performed only upon determining that the credential is valid.

The access decision point may be configured to receive a signal of an authentication medium of a user, the signal of the authentication medium comprising a credential.

The term access decision point may include any kind of access controller which is capable to decide whether an access point should be unlocked or not. The access decision point may be capable of determining an intent of a user to unlock an access point. Further, the access decision point may be capable of checking the validity of a user's credential. An access decision point may comprise an integrated and/or spaced apart tracking system which is capable of tracking a position of a user's authentication medium. Examples for said tracking systems comprise camera tracking systems and/or ultra-wideband tracking systems. In case the access decision point comprises an ultra-wideband tracking system, the ultra-wideband tracking system may include a plurality of ultra-wideband anchors facilitating ranging of the authentication medium, in particular to determine successive positions of the authentication medium. Thus, an access decision point according to embodiments of the present invention may include an identification module which may be configured to verify a credential and/or an intent detection module which may for example track the user as described above, e.g. in order to determine the user's intent to access. The modules may be arranged spaced apart from each other and communicating with each other.

The access decision point may be connected to a power grid and/or may comprise a battery which is regularly to be replaced in order to prevent the access decision point from running out of energy. In a particular embodiment, the access decision point may be connected to a power grid and additionally comprise a battery in order to buffer potential blackouts in the power grid. An access control system then advantageously is capable of temporarily work during a blackout of a power grid.

The access decision point may be configured to generate an instruction comprising a no-action command, e.g. if no intent of a user is determined and/or no signal of an authentication medium of a user is received and/or no instruction request is received from an access decision point. Sending a first signal and a second signal, each comprising an instruction comprising a no-action command, may comprise not sending any signal, i.e. the access enforcement point may be configured to interpret an absence of a received first and second signal, e.g. after having sent an instruction request, as a no-action command/a no-action instruction.

The access decision point may be configured to receive a credential, preferably from an authentication medium. The access decision point may be configured to determine a validity of the credential. Determining the validity of the credential preferably may be included in determining the intent of the user to operate the access point. In some embodiments, the access decision point preferably may be configured to only generate and/or send the instruction if the credential is determined to be valid.

The computer-implemented multi-channel signaling method according to embodiments of the present disclosure may be performed by an access control system. The access control system e.g. may include the access enforcement point, the access decision point, the access point.

The access enforcement point and/or the access decision point and/or the authentication medium respectively e.g. may be configured to send and/or receive signals, e.g. respective signals, wirelessly. The first signal and/or the second signal and/or the instruction request may be wireless signals.

It is also possible that one of the first signal and the second signal is wireless, and that the other one is wired. The first signal and/or the second signal may be acoustic signals, e.g. ultrasound signals.

The method may further comprise receiving a third signal, via a third communication channel, by the access enforcement point. The third signal may comprise the instruction. The third communication channel may differ from the first communication channel and from the second communication channel.

The method may further comprise receiving an *nth* signal, via an *nth* communication channel, by the access enforcement point. The *nth* signal may comprise the instruction. The *nth* communication channel may differ from the first communication channel and from the second communication channel and from the third communication channel. *n* may be a natural number larger than 3. n may also be a set of numbers, each being larger than 3, wherein the respective communication channels are each different from all other communication channels. Features disclosed with respect to the first/second communication channel/signal may apply to the *nth* communication channel/signal and the third communication channel/signal as appropriate.

According to a second aspect of the present invention, an access enforcement point is provided. The access enforcement point may be configured to cause operation of an access point. The access enforcement point may be configured to receive a first signal via a first communication channel. The first signal may comprise an instruction. The access enforcement point may be configured to receive a second signal via a second communication channel. The second signal may comprise the instruction. The first communication channel may differ from the second communication channel. Optionally, the access enforcement point may be configured to be used in/to perform the computer-implemented multi-channel signaling method according to the first aspect of the present invention.

The access enforcement point may comprise a first receiver/transmitter/transceiver configured to receive/transmit signals via the first communication channel. The access enforcement point may comprise a second receiver/transmitter/transceiver configured to receive/transmit signals via the second communication channel. The access enforcement point may also comprise a single receiver/transmitter/transceiver comprising the first and the second receiver/transmitter/transceiver.

The access enforcement point may be configured to perform the computer-implemented multi-channel signaling method according to the first aspect of the present invention.

According to a third aspect of the present invention, a use of the access enforcement point according to the second aspect of the present invention in the computer-implemented multi-channel signaling method according to the first aspect of the present invention is provided.

According to a fourth aspect of the present invention, a computer program is provided. The computer program comprises computer-readable instructions which when executed by a data processing apparatus, optionally being the access enforcement point according to the second aspect of the present invention, cause the data processing apparatus to perform the computer-implemented multi-channel signaling method according to the first aspect of the present invention.

According to a fifth aspect of the present invention, an access control system may be provided. The access control system may comprise an access enforcement point and an access point, and optionally an access decision point. The access enforcement point may be configured to cause operation of the access point. The access enforcement point may be configured to receive a first signal via a first communication channel. The first signal may comprise an instruction. The access enforcement point may be configured to receive a second signal via a second communication channel. The second signal may comprise the instruction. The first communication channel may differ from the second communication channel. Optionally, the access enforcement point may be configured to be used in/to perform the computer-implemented multi-channel signaling method according to the first aspect of the present invention. The access decision point may be configured to send the first signal via the first communication channel. The access decision point may be configured to send the second signal via the second communication channel. The access control system may be configured to be used in/to perform a multi-channel signaling method according to the first aspect of the present invention.

The access control system may include more than one access decision point and e.g. a plurality of access enforcement points. The number of access enforcement points comprised in the access control system may be larger than the number of access decision points comprised in the access control system.

All technical implementation details and advantages described with respect to the first aspect of the present invention are self-evidently mutatis mutandis applicable for the second, third, fourth and fifth aspects of the present invention and vice versa.

### BRIEF DESCRIPTION OF THE DRAWINGS

The present invention will be explained in more detail, by way of example, with reference to the drawings in which:
- Figure 1: is a schematic top view of a building comprising a plurality of access enforcement points that implement a multi-channel signaling method for access control according to embodiments of the present invention.
- Figure 2: is a high-level flow chart diagram illustrating a sequence of a multi-channel signaling method for access control according to embodiments of the present invention.
- Figure 3: is a high-level flow chart diagram illustrating another sequence of a multichannel signaling method for access control according to embodiments of the present invention.
- Figure 4: is a high-level flow chart diagram illustrating another sequence of a multichannel signaling method for access control according to embodiments of the present invention.
- Figure 5: is a high-level flow chart diagram illustrating another sequence of a multichannel signaling method for access control according to embodiments of the present invention.
- Figure 6: is a highly schematic drawing of an access enforcement point according to embodiments of the present invention.

### FIGURATIVE DESCRIPTION OF EMBODIMENTS

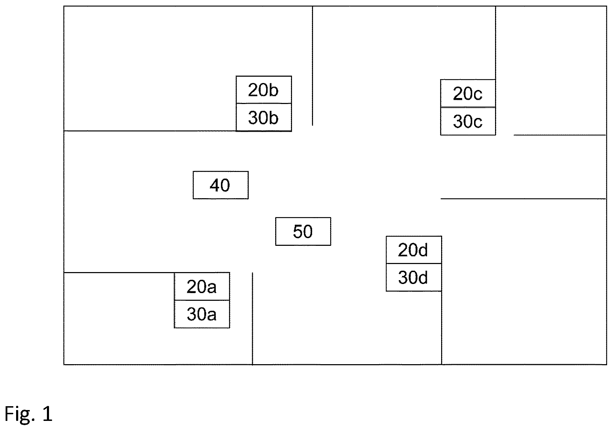

Reference will now be made to exemplary embodiments of the invention, examples of which are illustrated in the accompanying figures. Wherever possible, the same reference numbers will be used throughout the drawings to refer to the same or like parts. Moreover, the features explained in context of a specific embodiment, for example that one of Figure 1, also apply to any one of the other embodiments, when appropriate, unless differently described.

In the description of Figure 1, the reference signs 20a, 20b, 20c, 20d are abbreviated as 20a, ..., 20d; and the reference signs 30a, 30b, 30c, 30d are abbreviated as 30a, ..., 30d. Lowercase letters may be used to denote individual members generally having the same or similar functionalities. E.g., 20a and 20b may denote a first and a second access enforcement point, respectively.

Fig. 1 is a schematic top view of a building comprising a plurality of access enforcement points that implement a multi-channel signaling method for access control according to embodiments of the present invention.

The building comprises an access control system comprising a plurality of access enforcement points 20a, ..., 20d, a plurality of access points 30a, ..., 30d, an access decision point 40 and an authentication medium 50. The access control system implements a multi-channel signaling method for access control according to embodiments of the present invention.

Each of the access enforcement points 20a, ..., 20d is configured to cause operation of a corresponding access point 30a, ..., 30d.

The first signal and the second signal e.g. may be received from the access decision point 40 and/or from the authentication medium 50. The authentication medium 50 may be the authentication medium of a user (not shown in Fig. 1). E.g., the access decision point 40 may receive a signal from the authentication medium 50 and e.g. may then send a first signal and a second signal that may be based on the signal received from the authentication medium 50, via respective communication channels. The access decision point 40 may check the validity of a credential of the signal of the authentication medium 50.

The first communication channel of an access enforcement point may be disturbed, e.g. by another access enforcement point and/or by external electronic noise. The second communication channel of the access enforcement point may be undisturbed. In such a case, the method according to the present invention may still allow a reliable communication of the access enforcement point via the undisturbed second communication channel.

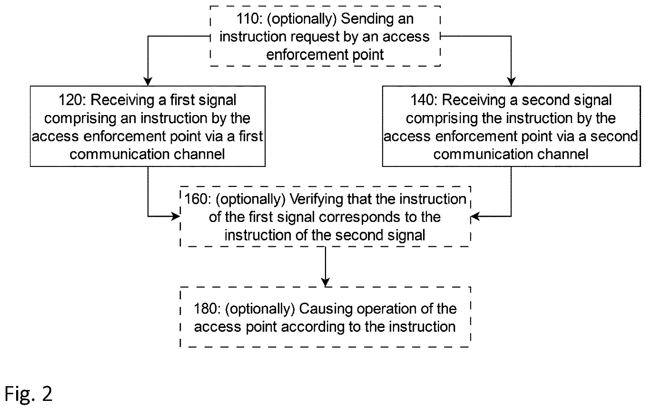

Figure 2 is a high-level flow chart diagram illustrating a sequence of a multi-channel signaling method for access control according to embodiments of the present invention.

In optional step 110, an instruction request may be sent by the access enforcement point. In step 120, the first signal is received by the access enforcement point via the first communication channel. In step 140, the second signal is received by the access enforcement point via the second communication channel. The first and the second signal both comprise the instruction, respectively. The first communication channel differs from the second communication channel. Step 140 may be performed prior to step 120, simultaneously, or subsequently. In optional step 160, it may be verified that the instruction comprised in the second signal corresponds/is identical to the instruction comprised in the first signal. In optional step 180, operation of the access point according to the instruction may be caused by the access enforcement point.

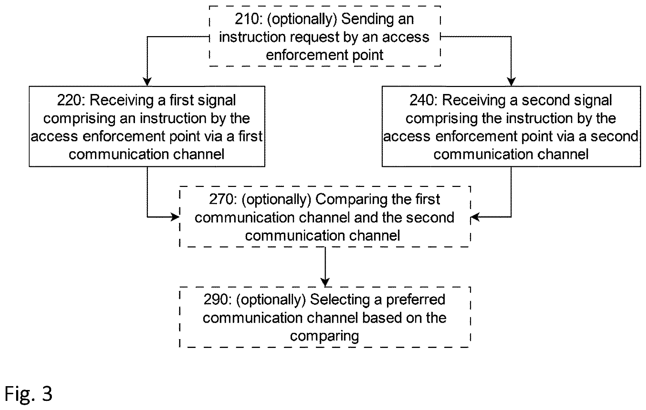

Figure 3 is a high-level flow chart diagram illustrating another sequence of a multi-channel signaling method for access control according to embodiments of the present invention.

In optional step 210, an instruction request may be sent by the access enforcement point. In step 220, the first signal is received by the access enforcement point via the first communication channel. In step 240, the second signal is received by the access enforcement point via the second communication channel. The first and the second signal both comprise the instruction, respectively. The first communication channel differs from the second communication channel. Step 240 may be performed prior to step 220, simultaneously, or subsequently. In optional step 270, the first communication channel may be compared. In optional step 290, a preferred communication channel of the access enforcement point may be selected based on the comparing.

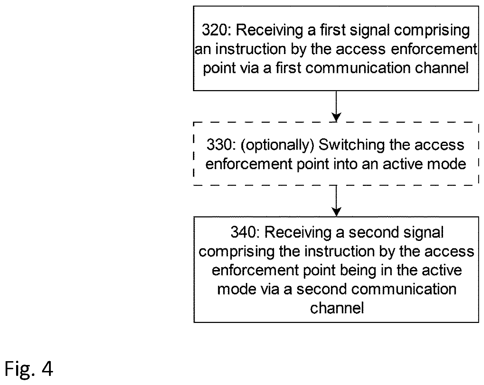

Figure 4 is a high-level flow chart diagram illustrating another sequence of a multi-channel signaling method for access control according to embodiments of the present invention.

In step 320, the first signal is received by the access enforcement point via the first communication channel. In optional step 330, the access enforcement point is switched into the active mode, in which the access enforcement point is able to receive signals via the second communication channel. In step 340, the second signal is received by the access enforcement point being in the active mode, via the second communication channel. The first signal may act as a wakeup signal for the access enforcement point.

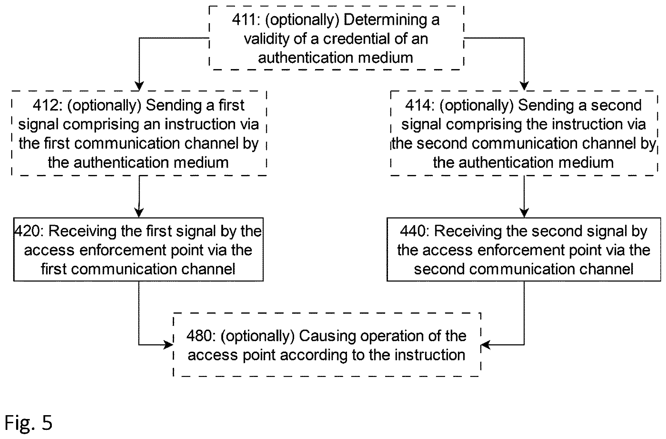

Figure 5 is a high-level flow chart diagram illustrating another sequence of a multi-channel signaling method for access control according to embodiments of the present invention.

In optional step 411, a validity of a credential of an authentication medium is determined. The validity of the credential may be determined using the authentication medium, e.g. by using a finger print sensor, e.g. of a smartphone, and/or by unlocking a lock screen. The validity of the credential may be determined by an access decision point. The validity of the credential may be verified by a backend server with which e.g. an access decision point and/or the authentication medium may communicate. In optional step 412, the first signal comprising the instruction may be sent by the authentication medium via the first communication channel. The first signal may also be sent by the access decision point. In optional step 414, the second signal comprising the instruction may be sent by the authentication medium via the second communication channel. The second signal may also be sent by the access decision point. In step 420, the first signal is received by the access enforcement point. In step 440, the second signal is received by the access enforcement point. In optional step 480, operation of the access point according to the instruction may be caused by the access enforcement point.

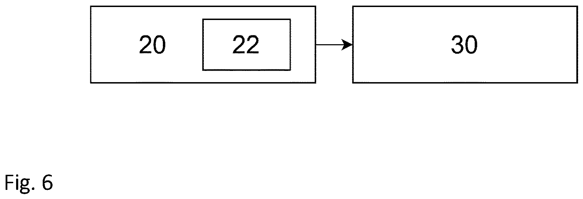

Figure 6 is a highly schematic drawing of an access enforcement point according to embodiments of the present invention.

The access enforcement point 20 may comprise energy harvesting means 22. The access enforcement point is configured to cause operation of the access point 30. The access enforcement point 20 may comprise a first receiver/transmitter/transceiver configured to receive/transmit signals via the first communication channel. The access enforcement point 20 may comprise a second receiver/transmitter/transceiver configured to receive/transmit signals via the second communication channel. The access enforcement point may also comprise a single receiver/transmitter/transceiver comprising the first and the second receiver/transmitter/transceiver.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some or all of the method steps may be executed by (or using) a hardware apparatus, such as a processor, a microprocessor, a programmable computer or an electronic circuit. Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable. Some embodiments of the invention provide a data carrier having electronically readable control signals, which are capable of cooperating with a programmable computer system, such that one of the methods described herein is performed.

Generally, embodiments of the invention can be implemented as a computer program (product) with a program code, the program code being operative for performing one of the methods when the computer program product runs on a computer. The program code may, for example, be stored on a machine-readable carrier. Other embodiments comprise the computer program for performing one of the methods described herein, stored on a machine-readable carrier. In other words, an embodiment of the present invention is, therefore, a computer program having a program code for performing one of the methods described herein, when the computer program runs on a computer. A further embodiment of the invention provides a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention provides a data stream or a sequence of signals representing the computer program for performing one of the methods described herein. The data stream or the sequence of signals may, for example, be configured to be transferred via a data communication connection, for example, via the internet.

A further embodiment of the invention provides a processing means, for example, a computer or a programmable logic device, configured to, or adapted to, perform one of the methods described herein.

A further embodiment of the invention provides a computer having installed thereon the computer program for performing one of the methods described herein.

A further embodiment of the invention provides an apparatus or a system configured to transfer (e.g., electronically or optically) a computer program for performing one of the methods described herein to a receiver. The receiver may, for example, be a computer, a mobile device, a memory device, or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### REFERENCE SIGNS

- 20: access enforcement point
- 22: energy harvesting means
- 30: access point
- 40: access decision point
- 50: authentication medium

## Claims

1. A computer-implemented multi-channel signaling method for access control, the method being performed at least by an access enforcement point (20), the access enforcement point (20) being configured to cause operation of an access point (30), the method comprising:
receiving, by the access enforcement point (20) and via a first communication channel, a first signal comprising an instruction, and
receiving, by the access enforcement point (20) and via a second communication channel, a second signal comprising the instruction,
wherein the first communication channel differs from the second communication channel.

2. The computer-implemented multi-channel signaling method according to claim 1,
wherein the second signal is received simultaneously to receiving the first signal, or wherein the second signal is received within less than 200 ms before or after receiving the first signal.

3. The computer-implemented multi-channel signaling method according to any one of the preceding claims, wherein the first communication channel differs from the second communication channel in respect to at least one of the following aspects:
• frequency band,
• carrier frequency,
• communication range,
• energy efficiency, and
• communication protocol.

4. The computer-implemented multi-channel signaling method according to the preceding claim,
wherein the first communication channel uses a first communication protocol and the second communication channel uses a second communication protocol and wherein the first communication protocol differs from the second communication protocol,
wherein optionally, the first communication protocol differs from the second communication protocol in terms of at least one of the following aspects:
• type of information encoding,
• modulation type,
• signal amplitude,
• energy efficiency,
• communication range, and
• information density.

5. The computer-implemented multi-channel signaling method according to any one of the preceding claims, wherein the method further comprises: verifying that the instruction comprised in the second signal corresponds to the instruction comprised in the first signal.

6. The computer-implemented multi-channel signaling method according to any one of the preceding claims, wherein the method further comprises: causing, by the access enforcement point (20), operation of the access point (30) according to the instruction,
wherein optionally, claim 6 depends on claim 5 and operation of the access point (30) is only caused upon verifying that the instruction comprised in the second signal corresponds to the instruction comprised in the first signal.

7. The computer-implemented multi-channel signaling method according to any one of the preceding claims, wherein the method further comprises, prior to receiving the first signal and prior to receiving the second signal: sending, by the access enforcement point (20), an instruction request.

8. The computer-implemented multi-channel signaling method according to any one of the preceding claims, wherein the method further comprises:
comparing the first communication channel and the second communication channel,
wherein the method optionally further comprises: selecting, based on comparing the first communication channel and the second communication channel, a preferred communication channel.

9. The computer-implemented multi-channel signaling method according to any one of the preceding claims, wherein the access enforcement point (20) comprises energy harvesting means (22), and wherein the method further comprises: harvesting energy, by the energy harvesting means (22), and providing the harvested energy to the access enforcement point (20).

10. The computer-implemented multi-channel signaling method according to any one of the preceding claims,
wherein the access enforcement point (20) is operable in a low-power mode and in an active mode, wherein the access enforcement point (20) being in the low-power mode is configured to operate at a lower power consumption as compared to a power consumption of the access enforcement point (20) being in the active mode,
wherein in the low-power mode, the access enforcement point (20) is able to receive signals via the first communication channel and unable to receive signals via the second communication channel, and wherein in the active mode, the access enforcement point (20) is able to receive signals via the second communication channel,
wherein the method further comprises:
upon receiving the first signal via the first communication channel, switching the access enforcement point (20) into the active mode, and
receiving, by the access enforcement point (20) being in the active mode, the second signal via the second communication channel.

11. The computer-implemented multi-channel signaling method according to the preceding claim,
wherein the first signal and the second signal each is received from an authentication medium (50), optionally a mobile device or a physical key card,
wherein optionally, the authentication medium (50) includes a credential,
wherein optionally, prior to sending the first signal and the second signal, a validity of the credential is determined, and wherein sending the first signal and the second signal is only performed upon determining that the credential is valid.

12. The computer-implemented multi-channel signaling method according to any of claims 1 to 10, wherein the first signal and the second signal each is received from an access decision point (40), and wherein the access decision point (40) is configured to:
receive a signal of an authentication medium (50) of a user,
determine an intent of the user to operate the access point (30), upon receiving the signal of the authentication medium (50),
generate the instruction, upon determining the intent of the user,
send, via the first communication channel, the first signal to the access enforcement point (20), the first signal comprising the instruction, and
send, via the second communication channel, the second signal to the access enforcement point (20), the second signal comprising the instruction,
wherein optionally, claim 12 depends on claim 7 and the access decision point (40) is configured to receive the instruction request sent by the access enforcement point (20) and to generate the instruction based on receiving the instruction request.

13. An access enforcement point (20),
wherein the access enforcement point (20) is configured to cause operation of an access point (30),
wherein the access enforcement point (20) is configured to receive a first signal via a first communication channel, the first signal comprising an instruction,
wherein the access enforcement point (20) is configured to receive a second signal via a second communication channel, the second signal comprising the instruction,
wherein the first communication channel differs from the second communication channel,
wherein optionally, the access enforcement point (20) is configured perform the computer-implemented multi-channel signaling method according to any one of claims 1 to 12.

14. Use of the access enforcement point (20) according to claim 13 in the computer-implemented multi-channel signaling method according to any of claims 1 to 12.

15. A computer program comprising computer-readable instructions which when executed by a data processing apparatus, optionally being the access enforcement point (20) according to claim 13, cause the data processing apparatus to perform the computer-implemented multi-channel signaling method according to any of claims 1 to 12.
